# EUROPÄISCHE PATENTSCHRIFT

(11) **EP 1 413 817 B1**
(45) Veröffentlichungstag und Bekanntmachung des Hinweises auf die Patenterteilung: **16.11.2005**
(21) Anmeldenummer: 03018201.8
(22) Anmeldetag: 09.08.2003
(51) Int. Cl.: F16L 33/08

(54) **Verbindung einer Schelle mit einem Schlauch zur Vorpositionierung der Schelle**
Connection of a clamp to a hose, in order to pre-position the clamp on the hose
Raccordement d'un collier de serrage et un tuyau, pour prépositionner le collier de serrage

(30) Priorität: 24.10.2002 DE 10249474
(43) Veröffentlichungstag der Anmeldung: 28.04.2004
(73) Patentinhaber: Rasmussen GmbH, 63477 Maintal (DE)
(72) Erfinder: Beicht, Bernd, 64823 Grossumstadt (DE); Krauss, Mathias, 63477 Maintal (DE)
(74) Vertreter: Knoblauch, Andreas

(56) Entgegenhaltungen:
- EP-A- 0 631 080
- DE-A- 3 543 717
- US-A- 5 622 391

## Beschreibung

Die Erfindung betrifft eine Verbindung einer Schelle mit einem Schlauch, der Vorsprünge aufweist, zwischen denen die Schelle den Schlauch vor dem Festklemmen der Schelle auf dem Schlauch zur Vorpositionierung lose umgibt.

Bei einer bekannten Vorrichtung dieser Art (DE 35 43 717 A1) sind die Vorsprünge als umlaufende Wulste ausgebildet. Die Wulste verhindern eine Axialverschiebung der Schelle auf dem Schlauch, wenn die Schelle nur lose auf dem Schlauch vorpositioniert ist und zusammen mit dem Schlauch auf einen Rohrstutzen oder dergleichen aufgeschoben und erst dann auf dem Schlauch festgeklemmt wird, um den Schlauch auf dem Rohrstutzen festzuklemmen.

Solange die Schelle nicht festgeklemmt ist, kann sie sich jedoch in Umfangsrichtung auf dem Schlauch verdrehen, was in vielen Fällen unerwünscht ist, insbesondere wenn es sich um eine Schneckengewindeschelle handelt, deren Spannschraube mittels eines Schraubendrehers angezogen werden muß, um die Schelle festzuklemmen. Beim Ansetzen des Schraubendrehers wird die Schneckengewindeschelle auf dem Schlauch verdreht, so daß sie nicht gespannt werden kann.

Der Erfindung liegt die Aufgabe zugrunde, eine Verbindung der eingangs genannten Art anzugeben, die ein Verdrehen der Schelle auf dem Schlauch in lose vorpositionierter Lage der Schelle verhindert.

Erfindungsgemäß ist diese Aufgabe dadurch gelöst, daß die Vorsprünge beiderseits der Schelle Lücken aufweisen, in die seitlich vorstehende Laschen eines an der Innenseite der Schelle befestigten Arretierstreifens passend eingreifen.

Bei dieser Lösung läßt sich die Schelle nicht verdrehen, weil die Laschen vor und bei Ausübung eines Drehmoments auf die Schelle in Umfangsrichtung des Schlauches an den Vorsprüngen anliegen und der Arretierstreifen an der Schelle befestigt ist.

Vorzugsweise überdeckt der Arretierstreifen eine Verbindungsstelle sich überlappender Endabschnitte eines Spannbands der Schelle. Der Arretierstreifen dient dabei zusätzlich als Schlauchschoner, der Kanten an der Verbindungsstelle abdeckt und damit ein Eingreifen der Kanten in den Schlauch und demzufolge eine Beschädigung des Schlauches durch die Kanten verhindert, und als ein Mittel, das eine durch Kanten oder Abstufungen der Schelle bewirkte ungleichmäßige Einspanndruckverteilung über den Schlauchumfang weitgehend verhindert, da der Arretierstreifen entsprechend dünn oder an seinen Enden zugespitzt oder rund ausgebildet sein kann, so daß seine Enden einen nahezu stufenlosen Übergang bilden.

So kann die Schelle eine Schneckengewindeschelle sein, über deren Verschlußgehäuse-Boden hinweg sich der Arretierstreifen erstreckt und damit an den in Bezug auf den Schlauch axialen Querrändern des Gehäusebodens und auch eine am freien Ende des im Gehäuse befestigten Endabschnitts des Spannbands auftretende Stufe abdeckt.

Günstig ist es, wenn die Vorsprünge des Schlauches auf Seiten des Kopfes der Spannschraube der Schneckengewindeschelle liegen und an jedem seitlichen Rand des Arretierstreifens eine Befestigungslasche auf der dem Spannschraubenkopf abgewandten Seite des Verschlußgehäuses vorgesehen ist und jeweils einen der seitlichen Ränder des Spannbands der Schneckengewindeschelle übergreift. Diese Art der Befestigung des Arretierstreifens ist einfach und läßt sich auf einfache Weise durchführen.

Vorzugsweise ist dafür gesorgt, daß auf Seiten des Spannschraubenkopfes an jedem seitlichen Rand des Arretierstreifens jeweils eine Führungslasche für das Spannband der Schneckengewindeschelle radial nach außen vorsteht. Diese Führungslaschen bewirken nicht nur eine seitliche Führung des radial äußeren, aus dem Verschlußgehäuse herausgezogenen Endabschnitts des Spannbands beim Spannen der Schneckengewindeschelle, sondern verhindern auch eine seitliche Verschwenkung des Verschlußgehäuses relativ zu dem Arretierstreifen beim Spannen des Spannbands.

Ferner ist es vorteilhaft, wenn diametral gegenüber dem Verschlußgehäuse der Schneckengewindeschelle zwei weitere Vorsprünge des Schlauches beiderseits des Spannbands vorgesehen sind. Diese weiteren Vorsprünge verhindern auf einfache Weise eine Verschwenkung des Verschlußgehäuses beim Spannen der Schneckengewindeschelle um eine Querachse des Schlauches und damit eine unerwünschte Schrägstellung der Schellenebene zur Längsachse des Schlauches. Die seitlichen Ränder des Spannbands greifen dann nicht in das Schlauchmaterial ein.

Eine Weiterbildung kann darin bestehen, daß die in die Lücken zwischen den Vorsprüngen des Schlauches eingreifenden Laschen des Arretierstreifens in beiden Umfangsrichtungen des Schlauches vorstehende Fortsätze aufweisen, die stumpfwinklig radial nach außen abgewinkelt sind und in Hinterschneidungen der Seitenwände der Lükken eingreifen. Durch diese Ausbildung wird ein radiales Herausfallen der Schelle verhindert, solange sie nicht gespannt ist und ihr Innendurchmesser im ungespannten Zustand größer als der Schlauchdurchmesser zuzüglich der Höhe der Vorsprünge ist.

Die Ränder des Arretierstreifens können radial nach außen hochgestellt sein. Damit wird auch ein Einschneiden der Ränder des Arretierstreifens in das Schlauchmaterial verhindert.

Vorzugsweise besteht der Arretierstreifen aus Metall. Dieses Material ermöglicht es, den Arretierstreifen aus einem sehr viel längeren und dünnen Metallband ab- und zuzuschneiden und anschließend die Laschen in die erforderliche Lage umzubiegen.

Die Erfindung und ihre Weiterbildungen werden nachstehend anhand der beiliegenden Zeichnung eines bevorzugten Ausführungsbeispiels näher beschrieben. Darin stellen dar:
- Fig. 1: eine perspektivische Ansicht einer erfindungsgemäßen Verbindung einer herkömmlichen Schneckengewindeschelle mit einem Schlauch in einer vorpositionierten, ungespannten Lage der Schneckengewindeschelle,
- Fig. 2: eine Seitenansicht einer Schneckengewindeschelle, an der ein Arretierstreifen der erfindungsgemäßen Verbindung befestigt ist,
- Fig. 3: eine Draufsicht auf die Schneckengewindeschelle nach Fig. 2 mit dem Arretierstreifen und
- Fig. 4: eine Platine eines aus einem Metallband ab- und zugeschnittenen Arretierstreifens der erfindungsgemäßen Verbindung vor dem Umbiegen seiner Laschen und Längsränder.

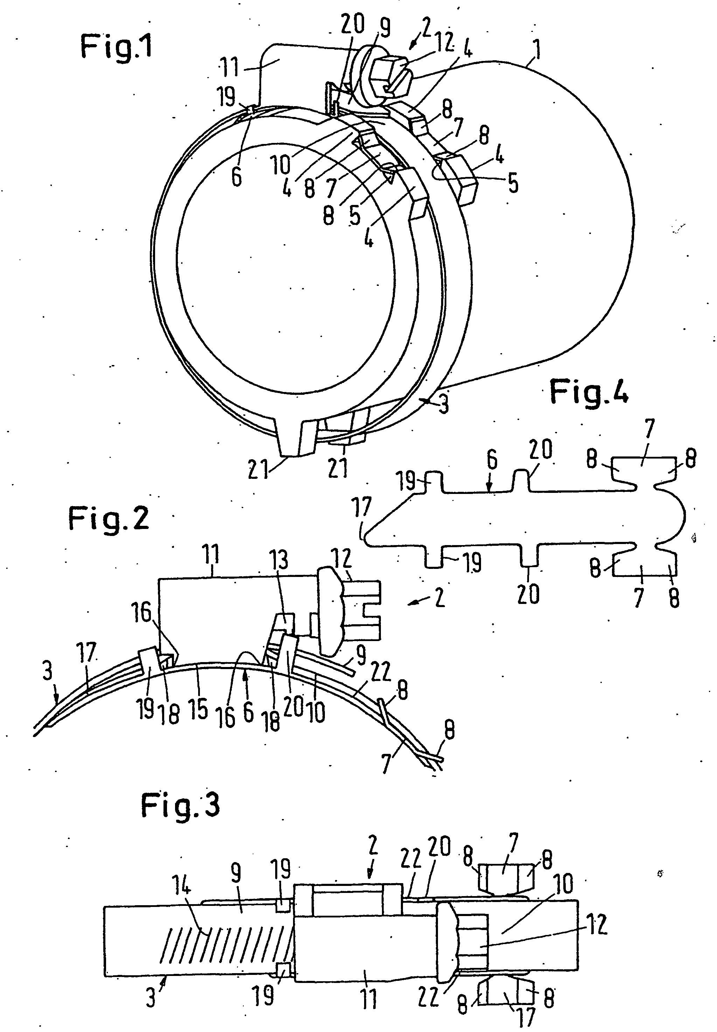

Bei der in Fig. 1 dargestellten Verbindung eines Schlauches 1 mit einer lose auf dem Schlauch 1 vorpositionierten Schelle 2, hier einer Schneckengewindeschelle, weist der Schlauch 1 beiderseits des Spannbandes 3 der Schelle 2 zwei einstückig mit dem Schlauch ausgebildete Vorsprünge 4 auf. Die auf der einen Seite des Spannbands 3 liegenden beiden Vorsprünge 4 begrenzen zwischen sich eine Lücke 5, die axial mit einer Lücke 5 zwischen den beiden gegenüberliegenden Vorsprüngen 4 fluchtet. Die Seitenwände der Lücken 5 sind spitzwinklig hinterschnitten. In die Lücke 5 greifen seitlich an einem Arretierstreifen 6 vorstehende Laschen 7 passend ein. Wie auch die Fig. 2 und 3 erkennen lassen, haben die Laschen 7 jeweils zwei sich in Umfangsrichtung des Schlauches 1 erstreckende, stumpfwinklig nach außen abgewinkelte Fortsätze 8, die die Hinterschneidungen der Seitenwände der Lücken 5 gemäß Fig. 1 untergreifen, um ein Herausfallen des Arretierstreifens 6 aus den Lücken 5 zu verhindern.

Die Schelle 2 wird mit ihrem eine Verbindungsstelle der sich überlappenden Endabschnitte 9, 10 des Spannbands 3 bildenden Verschlußgehäuse 11 so auf dem Schlauch 1 angeordnet, daß die Vorsprünge 4 auf Seiten des Kopfes 12 der Spannschraube 13 der Schelle liegen. Die Spannschraube 13 ist in dem Gehäuse 11 drehbar gelagert und greift in Gewindeabschnitte 14 auf der Außenseite des radial äußeren Endabschnitts 9 des Spannbands 3 ein. Der Arretierstreifen 6 überdeckt die Unterseite des Gehäusebodens 15, auf dessen Innenseite der andere Endabschnitt 10 befestigt ist, bis über die axialen Querränder 16 des Gehäusebodens 15 und das freie Ende 17 des Endabschnitts 10 hinweg. Der Gehäuseboden 15 ist zwischen radial nach innen vorstehenden, im Endabschnitt 10 ausgebildeten Sicken 18 eingehängt.

An jedem seitlichen Rand des Arretierstreifens 6 ist ferne eine Befestigungslasche 19 vorgesehen, die im montierten Zustand der Schelle 2 auf der dem Spannschraubenkopf 12 abgewandten Seite des Verschlußgehäuses 11 liegt und jeweils einen der seitlichen Ränder des Spannbands 3 übergreift. Auf Seiten des Spannschraubenkopfes steht an jedem seitlichen Rand des Arretierstreifens 6 jeweils eine Führungslasche 20 für das Spannband 3 der Schelle 2 radial nach außen vor. Die Längsränder 22 des Arretierstreifens sind durch Biegen radial nach außen hochgestellt.

Die beiderseits am Spannband 3 anliegenden Vorsprünge 4 verhindern zum einen eine axiale Verschiebung der Schelle 2 auf dem Schlauch 1. Zum anderen kann die Schelle 2 durch den Eingriff der Laschen 7 des Arretierstreifens 6 zwischen den Vorsprüngen 4 des Schlauches 1 auf der einen Seite des Verschlußgehäuses 11 und durch die Befestigung des Arretierstreifens 6 mittels der Befestigungslaschen 19 am Spannband 3 auf der anderen Seite des Verschlußgehäuses 11 nicht in Umfangsrichtung des Schlauches 1 verdreht werden, insbesondere wenn die Spannschraube 13 mittels eines Schraubendrehers angezogen wird, um die Schelle 2 auf dem Schlauch 1 und damit den Schlauch 1 auf dem Rohrstutzen, auf den der Schlauch 1 und die Schlauchschelle 2 zuvor gemeinsam aufgesteckt wurden, festzuklemmen. Die zusätzlichen Vorsprünge 21, zwischen denen das Spannband 3 ebenfalls seitlich anliegt, verhindern eine Verschwenkung der Schelle 2 um eine Querachse des Schlauches beim Anziehen der Spannschraube 13, so daß das Spannband 3 beim Spannen nicht mit seinen Rändern in das Schlauchmaterial einschneidet. Die Führungslaschen 20 verhindern eine seitliche Verschwenkung des durch die Spannschraube 13 beim Spannen aus dem Gehäuse herausgezogenen Teils des Endabschnitts 9, bevor er zwischen die Vorsprünge 14 gelangt und durch diese weiterhin geführt wird. Die hochstehenden Längsränder 22 des Arretierstreifens 6 verhindern, daß die Kanten der Längsränder des Arretierstreifens 6 ins Schlauchmaterial einschneiden. Die Überdeckung der Querränder 16 des Bodens 15 des Verschlußgehäuses 11 und des freien Endes 17 des Endabschnitts 10 durch den Arretierstreifen 6 verhindert, daß deren Kanten ins Schlauchmaterial einschneiden, und gleicht eine Ungleichförmigkeit des Einspanndrucks über den Schlauchumfang zwischen Schlauch 1 und Schelle 2 weitgehend aus. Ferner werden sich quer zum Arretierstreifen 6 erstreckende Abstufungen an dessen Ende durch Verjüngung dieser Enden durch Abschrägung oder Rundung, wie in Fig. 4 dargestellt, vermieden.

## Patentansprüche

1. Verbindung einer Schelle (2) mit einem Schlauch (1), der Vorsprünge (4) aufweist, zwischen denen die Schelle (2) den Schlauch (1) vor dem Festklemmen der Schelle (2) auf dem Schlauch (1) zur Vorpositionierung lose umgibt, **dadurch gekennzeichnet, daß** die Vorsprünge (4) beiderseits der Schelle (2) Lücken (5) aufweisen, in die seitlich vorstehende Laschen (7) eines an der Innenseite der Schelle (2) befestigten Arretierstreifens (6) passend eingreifen.

2. Verbindung nach Anspruch 1, **dadurch gekennzeichnet, daß** der Arretierstreifen (6) eine Verbindungsstelle sich überlappender Endabschnitte (9, 10) eines Spannbands (3) der Schelle (2) abdeckt.

3. Verbindung nach Anspruch 1, **dadurch gekennzeichnet, daß** die Schelle (2) eine Schneckengewindeschelle ist, über deren Verschlußgehäuse-Boden (15) hinweg sich der Arretierstreifen (6) erstreckt.

4. Verbindung nach Anspruch 3, **dadurch gekennzeichnet, daß** die Vorsprünge (4) des Schlauches (1) auf Seiten des Kopfes (12) der Spannschraube (13) der Schneckengewindeschelle liegen und an jedem seitlichen Rand des Arretierstreifens (6) eine Befestigungslasche (19) auf der dem Spannschraubenkopf (12) abgewandten Seite des Verschlußgehäuses (11) vorgesehen ist und jeweils einen der seitlichen Ränder des Spannbands (3) der Schneckengewindeschelle (2) übergreift.

5. Verbindung nach Anspruch 3 oder 4, **dadurch gekennzeichnet, daß** auf Seiten des Spannschraubenkopfes (12) an jedem seitlichen Rand des Arretierstreifens (6) jeweils eine Führungslasche (20) für das Spannband (3) der Schneckengewindeschelle (2) radial nach außen vorsteht.

6. Verbindung nach einem der Ansprüche 3 bis 5, **dadurch gekennzeichnet, daß** etwa diametral gegenüber dem Verschlußgehäuse (11) der Schneckengewindeschelle (2) zwei weitere Vorsprünge (21) des Schlauches (1) beiderseits des Spannbands (3) vorgesehen sind.

7. Verbindung nach einem der Ansprüche 1 bis 6, **dadurch gekennzeichnet, daß** die in die Lücken (5) zwischen den Vorsprüngen (4) des Schlauches (1) eingreifenden Laschen (7) des Arretierstreifens (6) in beiden Umfangsrichtungen des Schlauches (1) vorstehende Fortsätze (8) aufweisen, die stumpfwinklig radial nach außen abgewinkelt sind und in Hinterschneidungen der Seitenwände der Lücken (5) eingreifen.

8. Verbindung nach einem der Ansprüche 1 bis 7, **dadurch gekennzeichnet, daß** die Längsränder (22) des Arretierstreifens (6) radial nach außen hochgestellt sind.

9. Verbindung nach einem der Ansprüche 1 bis 8, **dadurch gekennzeichnet, daß** der Arretierstreifen (6) aus Metall besteht.

## Claims

1. Connection of a clamp (2) with a hose (1) provided with projections (4), between which projections the clamp (2) is loosely surrounding the hose (1) for the purpose of pre-positioning the clamp relative to the hose before tightening the clamp on the hose, **characterised in that** the projections (4) are provided on both sides of the clamp with gaps (5), into which gaps laterally projecting tabs (4) of a locking strip (6) fastened on the inner side of the clamp (2) are fitted.

2. Connection according to claim 1, **characterised in that** the locking strip (6) covers a connecting location of overlapping end sections (9, 10) of a tensioning band (3) of the clamp (2).

3. Connection according to claim 1, **characterised in that** the clamp (2) is a worm drive clamp, wherein the locking strip (6) extends across the closure housing bottom (15) of the worm drive clamp.

4. Connection according to claim 3, **characterised in that** the projections (4) of the hose (1) are located on that side of the worm drive clamp where the head (12) of the clamping screw (13) is positioned, and on each lateral edge of the locking strip (6) a fastening tab (19) is provided on that side of the closure housing (11) which is facing away from the clamping screw head (12), the tab (19) engages across one of the lateral edges of the tensioning band (3) of the worm drive clamp (2).

5. Connection according to claim 3 or 4, **characterised in that** at the side where the clamping screw head (12) is located a guide tab (20) for the clamping band (3) of the worm drive clamp (2) is provided on each lateral edge of the locking strip (6) and projects radially outwardly.

6. Connection according to one of the claims 3 to 5, **characterised in that** substantially diametrically opposed to the closure housing (11) of the worm drive clamp (2) two additional projections (21) of the hose are provided on either side of the camping band (3).

7. Connection according to one of the claims 1 to 6, **characterised in that** the tabs (7) of the locking strip (6), which tabs are engaging the gaps (5) between the projections (4) of the hose (1) have prolongations (8) in both circumferential directions of the hose (1), wherein the prolongations are bent radially outwardly at an obtuse angle and engage undercuts of the sidewalls of the gaps (5).

8. Connection according to one of the claims 1 to 7, **characterised in that** the longitudinal edges of the locking strip (6) are bent radially outwardly.

9. Connection according to one of the claims 1 to 8, **characterised in that** the locking strip (6) is made of metal.

## Revendications

1. Liaison d'un collier de serrage (2) avec un tuyau flexible (1) comprenant des saillies (4) entre lesquelles le collier de serrage (2) entoure de façon lâche le tuyau (1) avant le serrage du collier (2) sur le tuyau (1) dans le but d'un pré-positionnement, **caractérisée en ce que** les saillies (4) comprennent des intervalles (5) de part et d'autre du collier (2), dans lesquels s'engagent avec ajustement des pattes (7) dépassant latéralement d'un ruban d'arrêt (6) fixé sur le côté intérieur du collier (2).

2. Liaison selon la revendication 1, **caractérisée en ce que** le ruban d'arrêt (6) recouvre un emplacement de raccordement de tronçons d'extrémité (9, 10) en chevauchement d'un ruban de serrage (3) du collier (2).

3. Liaison selon la revendication 1, **caractérisée en ce que** le collier (2) est un collier de serrage à vis tangente avec boîtier de fermeture, tel que le ruban d'arrêt (6) s'étend au-delà du fond dudit boîtier de fermeture (15).

4. Liaison selon la revendication 3, **caractérisée en ce que** les saillies (4) du tuyau (1) se trouvent sur des côtés de la tête (12) de la vis de serrage (13) du collier de serrage à vis tangente, et **en ce que** sur chaque bord latéral du ruban d'arrêt (6) est prévue une patte de fixation (19) sur le côté du boîtier de fermeture (11) détourné de la tête de vis de serrage (12), patte qui coiffe l'un des bords latéraux du ruban de serrage (3) du collier de serrage à vis tangente (2).

5. Liaison selon la revendication 3 ou 4, **caractérisée en ce que** sur des côtés de la tête de vis de serrage (12), sur chaque bord latéral du ruban d'arrêt (6), est prévue une patte de guidage respective (20) destinée au ruban de serrage (3) du collier de serrage à vis tangente (2) et dépassant radialement vers l'extérieur.

6. Liaison selon l'une des revendications 3 à 5, **caractérisée en ce qu'**il est prévu approximativement diamétralement à l'opposé du boîtier de fermeture (11) du collier de serrage à vis tangente (2) deux autres saillies (21) du tuyau (1) des deux côtés du ruban de serrage (3).

7. Liaison selon l'une des revendications 1 à 6, **caractérisée en ce que** les pattes (7) du ruban d'arrêt (6) qui s'engagent dans les intervalles (5) entre les saillies (4) du tuyau (1) comprennent des prolongements (8) qui font saillie dans les deux directions périphériques du tuyau (1) et qui sont coudés radialement vers l'extérieur sous un angle obtus et s'engagent dans des contre-dépouilles des parois latérales des intervalles (5).

8. Liaison selon l'une des revendications 1 à 7, **caractérisée en ce que** les bords longitudinaux (22) du ruban d'arrêt (6) sont redressés radialement vers l'extérieur.

9. Liaison selon l'une des revendications 1 à 8, **caractérisée en ce que** le ruban d'arrêt (6) est constitué de métal.
